# EUROPÄISCHE PATENTSCHRIFT

(11) **EP 1 661 773 B1**
(45) Veröffentlichungstag und Bekanntmachung des Hinweises auf die Patenterteilung: **19.12.2007**
(21) Anmeldenummer: 05025098.4
(22) Anmeldetag: 17.11.2005
(51) Int. Cl.: B60R 21/20, B60Q 5/00

(54) **Fahrzeuglenkrad mit Airbagmodul**
Vehicle steering wheel with air bag restraint system
Volant de véhicule avec système de retenue à sac gonflable

(30) Priorität: 26.11.2004 DE 202004018362 U
(43) Veröffentlichungstag der Anmeldung: 31.05.2006
(73) Patentinhaber: TRW Automotive Safety Systems GmbH, 63743 Aschaffenburg (DE)
(72) Erfinder: Hirzmann, Guido, 63877 Sailauf (DE); Wuschik, Lars, 63849 Leidersbach (DE); Staudt, Norbert, 63743 Aschaffenburg (DE); Lefringhausen, Heinz, 63533 Mainhausen (DE); Weigand, Klaus, 36396 Steinau (DE)
(74) Vertreter: Strass, Jürgen

(56) Entgegenhaltungen:
- EP-A- 1 074 435
- DE-A1- 19 625 722
- US-A- 5 331 124

## Beschreibung

Die Erfindung betrifft ein Fahrzeuglenkrad mit einem beweglichen Airbagmodul, das zur Erzeugung eines Hupsignals um einen begrenzten axialen Hub niedergedrückt werden kann.

Solche schwimmend gelagerten Airbagmodule, die die Funktion eines Hupenbetätigungselements übernehmen, werden auch als "Floating-Horn"-Module bezeichnet. Sie haben gegenüber auf dem Lenkrad angeordneten Hupen-Tastschaltern den Vorteil, daß das Airbagmodul unabhängig vom Lenkradeinschlag immer eine mittige Position einnimmt, so daß die Hupenbetätigung in Gefahrensituationen vereinfacht ist. Das Modul ist gegen die Kraft von Druckfedern so weit nach unten bewegbar, daß wenigstens einer der am Boden der Modulaufnahme vorgesehenen Kontakte durch das Niederdrücken des Airbagmoduls geschlossen wird.

Um eine Hupenauslösung bei dezentraler Druckausübung auf das Airbagmodul zu gewährleisten, sind mehrere Kontaktstellen vorgesehen, und das Airbagmodul muß seitlich kippen können. Dies erfordert einen relativ großen Abstand zwischen der Seitenwand des Airbagmoduls und der seitlichen Führung der Airbagaufnahme, was der Forderung nach möglichst kleinen Spaltmaßen widerspricht und zudem unerwünschte Vibrationen des Airbagmoduls begünstigt.

Die DE 196 25 722 C2 zeigt ein Fahrzeuglenkrad mit einem Airbagmodul der eingangs genannten Art, bei dem der Abstand zwischen dem Airbagmodul und den seitlichen Führungen der Lenkstruktur durch seitlich abstehende Ansätze des Airbagmoduls vorgegeben ist.

Ein weiterer Nachteil der bislang üblichen Floating-Horn-Module ist die sehr aufwendige elektrische Anbindung der Vielzahl von Hupenkontakten, die mehrere Kabel und/oder Leiterplatten erfordert.

Die Erfindung schafft ein Fahrzeuglenkrad mit einem Floating-Horn-Modul, das mit wenigen Bauteilen eine zuverlässige Hupenauslösung gewährleistet.

Gemäß der Erfindung ist bei einem Lenkrad der eingangs genannten Art ein berührungslos arbeitendes Sensorsystem zur Erfassung des Hubs vorgesehen. Die Auslösung der Hupe erfolgt erfindungsgemäß also nicht durch mechanisches Schließen von Kontakten, sondern in Abhängigkeit des vom Sensorsystem erfaßten Hubs des Airbagmoduls. Dies hat den Vorteil, daß das Erfordernis der Vielzahl von Hupenkontakten und Druckfedern entfällt. Der Hub wird nur an einer Stelle gemessen, die zudem noch weitestgehend frei wählbar ist. Die berührungslose Erfassung des Hubs hat darüber hinaus den Vorteil, daß keine Abnutzung oder Alterung der Kontakte (z.B. durch Funkenerosion) stattfindet.

Die Messung des Hubs kann dadurch erleichtert werden, daß das Airbagmodul parallel zur Lenkachse des Lenkrads geführt ist. Das Airbagmodul führt dann unabhängig von der Betätigungsposition (Stelle der Druckausübung) eine axiale Bewegung (also keine Kippbewegung) aus, die gut meßbar ist. Außerdem lassen sich durch die parallele Führung kleine Spaltmaße erzielen.

Die parallele Führung des Airbagmoduls kann durch mehrere radial zwischen dem Airbagmodul und einer Airbagmodulaufnahme angeordnete Führungselemente erreicht oder wenigstens unterstützt werden.

Gemäß einer ersten Alternative umfaßt das Sensorsystem einen kontinuierlichen Wegmesser mit analogem Ausgangssignal. Die Auswertung der Wegmessung erfolgt in diesem Fall vorzugsweise in einem Mikrocontroller, mit dem der Wegmesser verbunden ist, wobei bei Multifunktionslenkrädern vorteilhaft ein ohnehin vorhandener Mikrocontroller genutzt werden kann. In einem solchen Mikrocontroller sind die für die Auslösung der Hupe notwendigen Daten und Abläufe problemlos integrierbar.

Gemäß einer zweiten Alternative umfaßt das Sensorsystem einen grenzwertigen Wegmesser mit digitalem Ausgangssignal. Diese einfachere und kostengünstigere Variante empfiehlt sich bei Lenkrädern ohne Mikrocontroller.

Die Erfindung wird nachfolgend unter Bezugnahme auf die beigefügten Zeichnungen genauer beschrieben. In den Zeichnungen zeigen:
- Figuren 1a, 1b schematisch ein Lenkrad mit einem Floating-Horn-Airbagmodul nach dem Stand der Technik;
- Figur 2 eine transparente perspektivische Ansicht eines erfindungsgemäßen Lenkrads;
- Figur 3 eine weitere transparente perspektivische Ansicht des Lenkrads aus Figur 2 ohne Außenmantel;
- Figur 4 eine perspektivische rückseitige Ansicht des Lenkrads aus Figur 2;
- Figur 5 eine perspektivische Detailansicht einer Hubbegrenzung des Lenkrads aus Figur 2;
- Figur 6 schematisch ein parallel geführtes Floating-Horn-Airbagmodul;
- Figur 7 ein Blockdiagramm für eine Messung des Hubs des Airbagmoduls mit digitalem Sensor; und
- Figur 8 ein Blockdiagramm für eine Messung des Hubs des Airbagmoduls mit analogem Sensor.

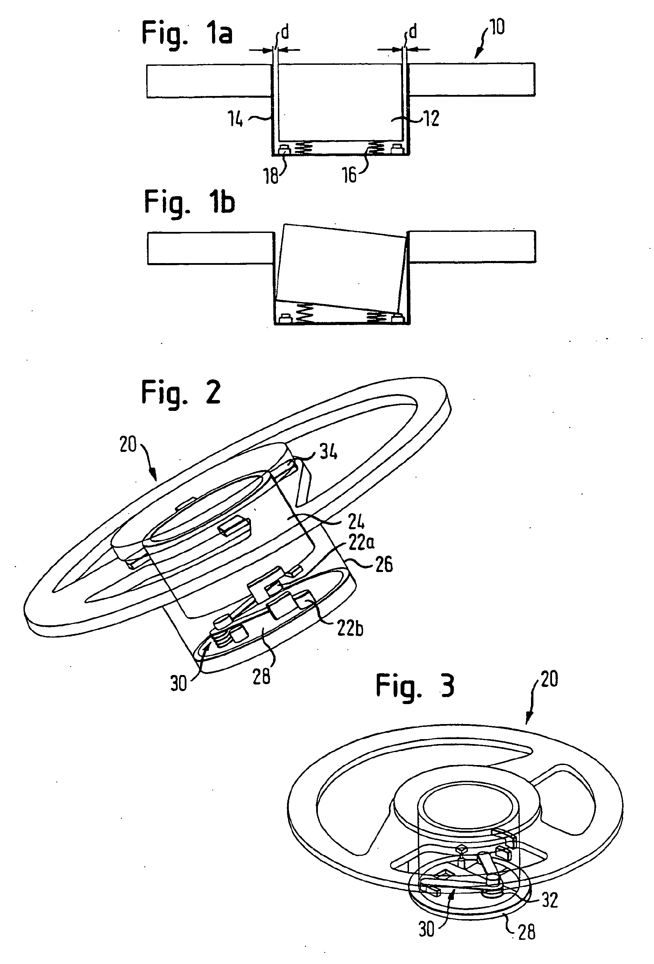

Die Figuren 1a und 1b zeigen in zweidimensionaler Darstellung beispielhaft ein konventionelles Lenkrad 10 mit einem Floating-Horn-Airbagmodul 12 in einer Aufnahme 14 der Lenkradstruktur. Das Airbagmodul 12 ist auf mehreren Druckfedern 16 in einem axialen Abstand zu mehreren Tastschaltern 18 gelagert. Es muß ein ausreichend großer radialer Abstand d zwischen dem Airbagmodul 12 und der Aufnahme 14 vorgesehen sein, um bei einem dezentralen Niederdrücken des Airbagmoduls 12 eine Betätigung eines Tastschalters 18 zu gewährleisten (s. Fig. 1b), ohne daß sich das Airbagmodul 12 in der Aufnahme 14 verklemmt.

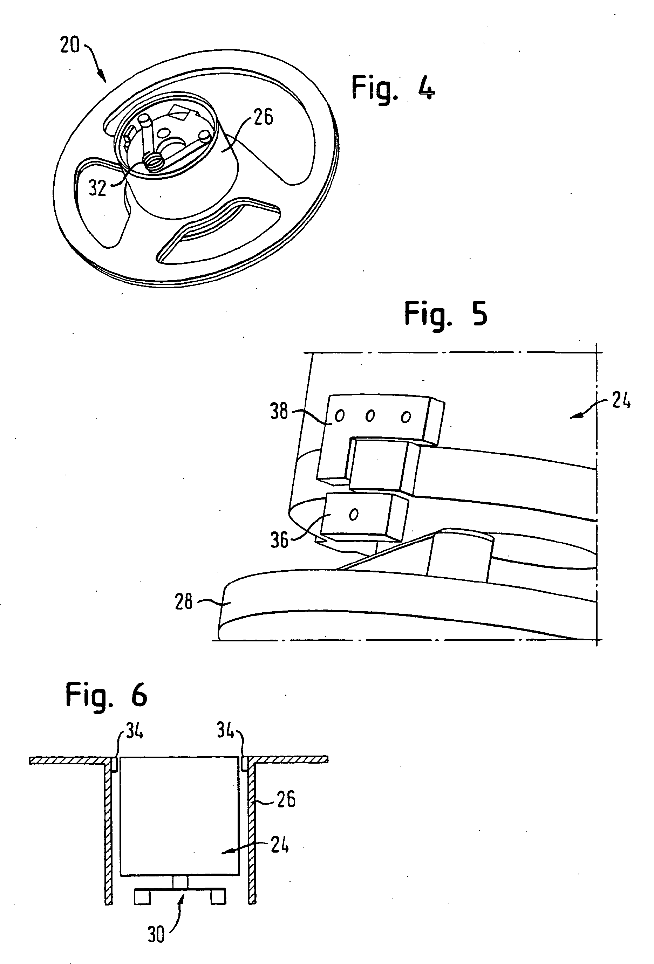

Die Figuren 2 bis 5 zeigen ein erfindungsgemäßes Lenkrad 20 mit einer nur symbolisch dargestellten berührungslos arbeitenden Sensoreinrichtung 22a, 22b zur Erfassung des Hubs bei einem Niederdrücken des Floating-Horn-Airbagmöduls 24. Das Airbagmodul 24 ist in einem zylindrischen Außenmantel 26 (in den Fig. 3 und 5 nicht dargestellt) aufgenommen, der auf der dem Fahrzeuginsassen abgewandten Seite mit einem Boden 28 geschlossen ist. Das Airbagmodul 24 ist auf einer auf dem Boden 28 angeordneten Führungseinrichtung 30 mit nur einer Druckfeder 32 gelagert. Die Führungseinrichtung 30 sorgt für eine zur Drehachse des Lenkrads 20 weitgehend parallele Führung des Airbagmoduls 24. Unterstützt wird die parallele Führung durch mehrere zwischen dem Airbagmodul 24 und dem Außenmantel 26 vorgesehenen Führungselemente 34. Die Führungselemente 34 können entweder am Airbagmodul 24 oder am Außenmantel 26 befestigt sein. Als Material für die Führungselemente 34 eignet sich insbesondere Polyoxymethylen (POM), das als Gleitlagerwerkstoff bewährt und für Trockenlauf geeignet ist.

Der Hub des Airbagmoduls 24 ist in beide axiale Richtungen durch Anschläge 36, 38 begrenzt, die in Figur 5 vergrößert dargestellt sind. Die Ausgestaltung der Anschläge 36, 38, die am Außenmantel 26 befestigt sind, verhindert außerdem eine Verdrehung des Airbagmoduls 24.

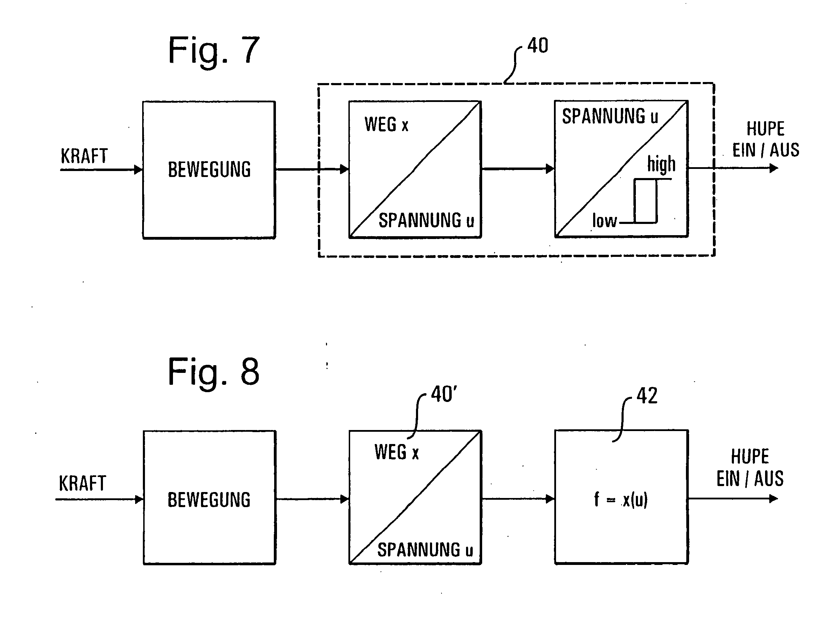

Die parallele Führung des Airbagmoduls 24, die in Figur 6 nochmals schematisch veranschaulicht ist, erlaubt unabhängig von der Betätigungsposition beim Niederdrücken des Airbagmoduls 24 eine reproduzierbare Bewegung des Airbagmoduls 24, die zuverlässig mit der Sensoreinrichtung 22a, 22b erfaßt werden kann. Die Besonderheit der Sensoreinrichtung 22a, 22b liegt darin, daß der Hub berührungslos erfaßt und die Hupe abhängig vom erfaßten Hub ausgelöst wird oder nicht. Tastschalter oder ähnliche Kontakteinrichtungen, die möglicherweise verschleißanfällig sind, sind nicht vorgesehen. Die Erfassung des Hubs kann insbesondere grenzwertig oder kontinuierlich erfolgen, wie im folgenden anhand der Figuren 7 und 8 erläutert wird.

Figur 7 zeigt ein Blockdiagramm für eine grenzwertige Wegmessung des Hubs des Airbagmoduls 24 mit einem digitalen Sensorsystem. Die vom Fahrzeuginsassen durch Drücken auf das Airbagmodul 24 ausgeübte Kraft wird wie oben beschrieben mit Hilfe der Parallelführung in eine weitgehend lineare axiale Bewegung des Airbagmoduls 24 umgesetzt. Ein Wegmesser 40 erfaßt den Hub des Airbagmoduls 24 und gibt bei Überschreiten eines vorgegebenen Schwellenwerts ein verändertes Ausgangssignal aus. Dieses veränderte Ausgangssignal kann z.B. eine mit Hilfe eines Schmitt-Triggers erzeugte Spannung auf einem definierten Pegel sein, die gegenüber einer bei nicht überschrittenem Schwellenwert vorliegenden definierten Ausgangsspannung erhöht ist. Die Hupe wird dann in Abhängigkeit dieses digitalen Ausgangssignals ("high" oder "low") ausgelöst oder nicht.

Figur 8 zeigt ein entsprechendes Blockdiagramm für eine kontinuierliche Wegmessung mit einem analogen Sensorsystem. Der Wegmesser 40' gibt hier im Gegensatz zu der zuvor beschriebenen grenzwertigen Messung kein digitales, sondern ein sich mit dem Hub des Airbagmoduls 24 änderndes analoges Ausgangssignal aus. Dieses Signal wird einem Mikrocontroller 42 zugeführt, der mit Hilfe einer hinterlegten mathematischen Funktion daraus den Hub des Airbagmoduls 24 berechnet. Neben der mathematischen Funktion, die die Abhängigkeit des Hubs vom Ausgangssignal des Wegmessers 40 beschreibt, ist auch ein Grenzwert hinterlegt. Überschreitet der berechnete Hub des Airbagmoduls 24 diesen Grenzwert, wird die Hupe ausgelöst.

Die Auswertung des analogen Ausgangssignals des Wegmessers 40' im Mikrocontroller 42 ist besonders einfach, wenn der Wegmesser 40' eine zur Auslenkung des Airbagmoduls 24 proportionale Spannung erzeugt, so daß sich als Ausgangskennlinie des Wegmessers 40' eine Gerade ergibt. In diesem Fall müssen nur die Steigung und der Achsenabschnitt der Geraden durch Referenzmessungen der Ausgangsspannung im nicht ausgelenkten Zustand (Ruhelage) und bei maximalem Hub des Airbagmoduls 24 bestimmt werden, wobei die Kenntnis des maximalen Hubs vorausgesetzt wird.

Die Verwendung des analogen Sensorsystems hat gegenüber dem digitalen System den Vorteil einer besseren Auflösung. Die Position des Airbagmoduls 24 ist jederzeit bekannt. Darüber hinaus bietet das analoge System die Möglichkeit der Anpassung der im Mikrocontroller 42 hinterlegten Parameter, was auch im Rahmen einer Selbstdiagnose erfolgen kann. Die für die Hupenauslösung erforderliche Funktionalität kann problemlos in einen vorhandenen Mikrocontroller eines Multifunktionslenkrads integriert werden.

In der folgenden Tabelle sind verschiedene Möglichkeiten für eine berührungslose Messung des Hubs des Airbagmoduls aufgeführt.

| **Meßprinzip** | **Realisierung** | **Ausgangssignal** |
|---|---|---|
| Kapazitiv | Kapazitätsänderung | Analog |
| | | |
| | Schwingkreisdämpfung | Analog |
| Induktiv | Induktivitätsänderung | Analog |
| | | |
| | Schwingkreisdämpfung | Analog |
| | | |
| | Transformatorisch | Analog |
| Magnetisch | Reedkontakt | Digital |
| | | |
| | Hallsensor | Digital |
| | | |
| | Magnetfeldsensor | Analog |
| Optisch | Lichtschranke | Digital |
| | | |
| | Lateraleffektdiode | Analog |
| | | |
| | Diode als Sender, Fototransistorsystem als Empfänger | Analog |
| Akustisch | Ultraschall | Analog |

## Patentansprüche

1. Fahrzeuglenkrad mit einem beweglichen Airbagmodul (24), das zur Erzeugung eines Hupsignals um einen begrenzten axialen Hub niedergedrückt werden kann, **dadurch gekennzeichnet, daß** ein berührungslos arbeitendes Sensorsystem (22a, 22b) zur Erfassung des Hubs vorgesehen ist.

2. Fahrzeuglenkrad nach Anspruch 1, **dadurch gekennzeichnet, daß** das Airbagmodul (24) parallel zur Lenkachse des Lenkrads (10) geführt ist.

3. Fahrzeuglenkrad nach Anspruch 2, **dadurch gekennzeichnet, daß** mehrere radial angeordnete Führungselemente (34) zwischen dem Airbagmodul (24) und einer Airbagmodulaufnahme (26) vorgesehen sind.

4. Fahrzeuglenkrad nach Anspruch 3, **dadurch gekennzeichnet, daß** die Führungselemente (34) aus Polyoxymethylen bestehen.

5. Fahrzeuglenkrad nach einem der Ansprüche 2 bis 4, **dadurch gekennzeichnet, daß** das Airbagmodul (24) auf einer Führungseinrichtung mit nur einer Druckfeder (32) gelagert ist.

6. Fahrzeuglenkrad nach einem der vorhergehenden Ansprüche, **dadurch gekennzeichnet, daß** das Sensorsystem (22a, 22b) einen kontinuierlichen Wegmesser (40') mit analogem Ausgangssignal umfaßt.

7. Fahrzeuglenkrad nach Anspruch 6, **dadurch gekennzeichnet, daß** der Wegmesser (40') mit einem Mikrocontroller (42) verbunden ist.

8. Fahrzeuglenkrad nach einem der Ansprüche 1 bis 5, **dadurch gekennzeichnet, daß** das Sensorsystem (22a, 22b) einen grenzwertigen Wegmesser (40) mit digitalem Ausgangssignal umfaßt.

## Claims

1. A vehicle steering wheel comprising a movable airbag module (24) which can be depressed by a limited axial stroke for generating a horn signal, **characterized in that** a contactlessly operating sensor system (22a, 22b) is provided for sensing the stroke.

2. The vehicle steering wheel according to claim 1, **characterized in that** the airbag module (24) is guided parallel to the steering axis of the steering wheel (10).

3. The vehicle steering wheel according to claim 2, **characterized in that** several radially arranged guide elements (34) are provided between the airbag module (24) and an airbag module mounting (26).

4. The vehicle steering wheel according to claim 3, **characterized in that** the guide elements (34) are made of polyoxymethylene.

5. The vehicle steering wheel according to any of claims 2 to 4, **characterized in that** the airbag module (24) is mounted on a guide device with only one compression spring (32).

6. The vehicle steering wheel according to any of the preceding claims, **characterized in that** the sensor system (22a, 22b) comprises a continuous path measurement device (40') yielding an analog output signal.

7. The vehicle steering wheel according to claim 6, **characterized in that** the path measurement device (40') is connected with a microcontroller (42).

8. The vehicle steering wheel according to any of claims 1 to 5, **characterized in that** the sensor system (22a, 22b) comprises a threshold path measurement device (40) yielding a digital output signal.

## Revendications

1. Volant de direction de véhicule, comprenant un module d'airbag (24) mobile qui peut être enfoncé sur une course axiale limitée pour produire un signal de klaxon, **caractérisé en ce qu'**il est prévu un système capteur (22a, 22b) fonctionnant sans contact pour détecter la course.

2. Volant de direction selon la revendication 1, **caractérisé en ce que** le module d'airbag (24) est guidé parallèlement à l'axe de direction du volant de direction (10).

3. Volant de direction selon la revendication 2, **caractérisé en ce qu'**il est prévu, entre le module d'airbag (24) et un logement (26) de module d'airbag, plusieurs éléments de guidage (34) agencés de manière radiale.

4. Volant de direction selon la revendication 3, **caractérisé en ce que** les éléments de guidage (34) sont en polyoxyméthylène.

5. Volant de direction selon l'une des revendications 2 à 4, **caractérisé en ce que** le module d'airbag (24) est monté sur un dispositif de guidage avec un seul ressort de pression (32).

6. Volant de direction selon l'une des revendications précédentes, **caractérisé en ce que** le système capteur (22a, 22b) comprend un capteur continu de déplacement (40') produisant un signal de sortie analogue.

7. Volant de direction selon la revendication 6, **caractérisé en ce que** le capteur de déplacement (40') est relié à un microcontrôleur (42).

8. Volant de direction selon l'une des revendications 1 à 5, **caractérisé en ce que** le système capteur (22a, 22b) comprend un capteur de déplacement (40) à seuil produisant un signal de sortie numérique.
